# DEMANDE DE BREVET EUROPEEN

(11) **EP 2 017 626 A1**
(43) Date de publication de la demande: **21.01.2009**
(21) Numéro de dépôt: 08290680.1
(22) Date de dépôt: 09.07.2008
(51) Int. Cl.: G01P 3/44, G01P 3/489

(54) **Ensemble formant palier à roulement équipé d'un système capteur d'informations**

(30) Priorité: 20.07.2007 FR 0705303
(71) Demandeur: SNR Roulements, 74000 Annecy (FR)
(72) Inventeur: Berthier, Julien, 74410 Saint Jorioz (FR); Ruhland, Siegfried, 74540 Saint Sylvestre (FR)
(74) Mandataire: Sayettat, Julien Christian

(57) **Abrégé**

L'invention concerne un ensemble formant palier à roulement équipé d'un système capteur d'informations comprenant un codeur (7) générateur d'impulsions magnétiques et un capteur (8) muni d'au moins deux éléments sensibles aptes à détecter ces impulsions, ledit palier comprenant un organe intérieur tournant (3), un organe extérieur fixe (1) et des corps roulants (5) disposés dans un espace de roulement, ledit palier comprenant en outre un couvercle (9) solidaire de l'organe fixe (1) pour obstruer latéralement ledit espace de roulement, ledit codeur étant solidarisé à l'organe tournant (3) derrière ledit couvercle et les éléments sensibles étant disposés, en regard dudit codeur, devant ledit couvercle de sorte que les impulsions soient détectées au travers dudit couvercle, et le capteur (8) comprenant un dispositif de traitement des signaux détectés par les éléments sensibles, ledit dispositif comprenant des moyens déclencheurs et des moyens d'application de la fonction XOR sur les signaux déclenchés, de sorte à augmenter la résolution du signal de sortie par rapport à celle des signaux détectés.

## Description

L'invention concerne un ensemble formant palier à roulement équipé d'un système capteur d'informations comprenant un codeur générateur d'impulsions magnétiques et un capteur muni d'au moins deux éléments sensibles aptes à détecter ces impulsions.

De tels ensembles, lorsqu'ils sont équipés d'un système capteur de vitesse de rotation, de position angulaire et/ou de sens de rotation, peuvent notamment être employés pour le montage d'une roue de véhicule automobile qui est pourvu d'un système d'antiblocage de ladite roue. En effet, les informations peuvent alors être utilisées par un calculateur d'assistance au freinage.

Un des problèmes qui se pose avec un tel ensemble est la protection de l'espace de roulement vis-à-vis de la pollution du milieu environnant, et notamment de la protection du codeur disposé au voisinage dudit espace.

Pour résoudre ce problème, on a proposé de rapporter un couvercle sur le palier pour protéger le codeur. Toutefois, dans le cas où le capteur est disposé devant le couvercle, il se pose alors le problème de la lecture des impulsions magnétiques au travers dudit couvercle. En effet, les éléments sensibles doivent être disposés à distance d'entrefer du codeur pour pouvoir lire les informations et, outre l'éloignement inhérent à la présence du couvercle, la traversée de ce dernier attenue également l'amplitude des informations à lire.

Par ailleurs, ce problème est d'autant plus critique dans le cas d'un ensemble formant palier pour le montage d'une roue non motrice de véhicule automobile. En effet, dans ce cas, l'organe tournant portant le codeur est l'organe intérieur, qui présente donc un diamètre réduit par rapport à un organe tournant intégrant une transmission. Il en résulte donc que le diamètre du codeur est également faible, ce qui limite la taille des pôles magnétiques générant les impulsions, et donc l'amplitude desdites impulsions. Par conséquent, notamment dans ce type de montage, la distance d'entrefer est trop petite pour pouvoir équiper le palier avec un couvercle de protection du codeur.

Pour résoudre ce problème, on a proposé d'équiper le palier avec un couvercle intégrant le capteur sur sa face en regard des éléments sensibles. Si cette solution permet de surmonter la limitation de la distance d'entrefer en rapprochant le capteur des éléments sensibles, elle complexifie la réalisation d'un couvercle capteur qui est spécifique pour chaque géométrie de montage.

L'invention a pour but de pallier aux problèmes de l'art antérieur en proposant un ensemble formant palier dans lequel le codeur est protégé par un couvercle tout en maintenant la résolution des informations délivrées au travers dudit couvercle, et ce même pour des diamètres de codeur réduits et/ou des capteurs dissociés mécaniquement du palier.

A cet effet, l'invention propose un ensemble formant palier à roulement équipé d'un système capteur d'informations comprenant un codeur générateur d'impulsions magnétiques et un capteur muni d'au moins deux éléments sensibles aptes à détecter ces impulsions, ledit palier comprenant un organe intérieur tournant, un organe extérieur fixe et des corps roulants disposés dans un espace de roulement formé entre lesdits organes pour permettre leur rotation relative, ledit palier comprenant en outre un couvercle solidaire de l'organe fixe pour obstruer latéralement ledit espace de roulement, dans lequel :
- ledit codeur est solidarisé à l'organe tournant derrière ledit couvercle et les éléments sensibles étant disposés, en regard dudit codeur, devant ledit couvercle de sorte que les impulsions soient détectées au travers dudit couvercle ; et
- le capteur comprend un dispositif de traitement des signaux détectés par les éléments sensibles, ledit dispositif comprenant des moyens déclencheurs et des moyens d'application de la fonction XOR (OU exclusif) sur les signaux déclenchés, de sorte à augmenter la résolution du signal de sortie par rapport à celle des signaux détectés.

D'autres objets et avantages de l'invention apparaîtront dans la description qui suit, faite en référence aux figures annexées, dans lesquelles :
- la figure 1 représente, en coupe longitudinale, un ensemble formant palier à roulement selon un mode de réalisation de l'invention ;
- la figure 2 est une vue agrandie de la figure 1 montrant la disposition respective du codeur, du couvercle et du capteur par rapport au palier ;
- la figure 3 est un diagramme présentant le traitement des signaux détectés.

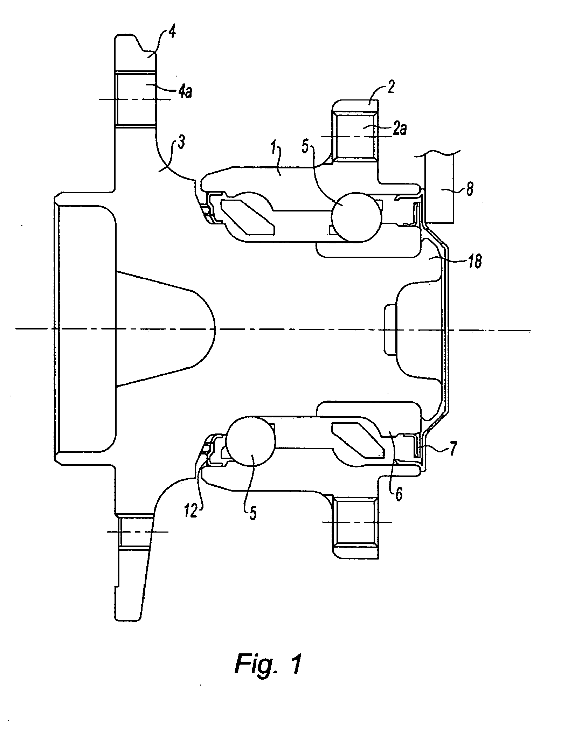

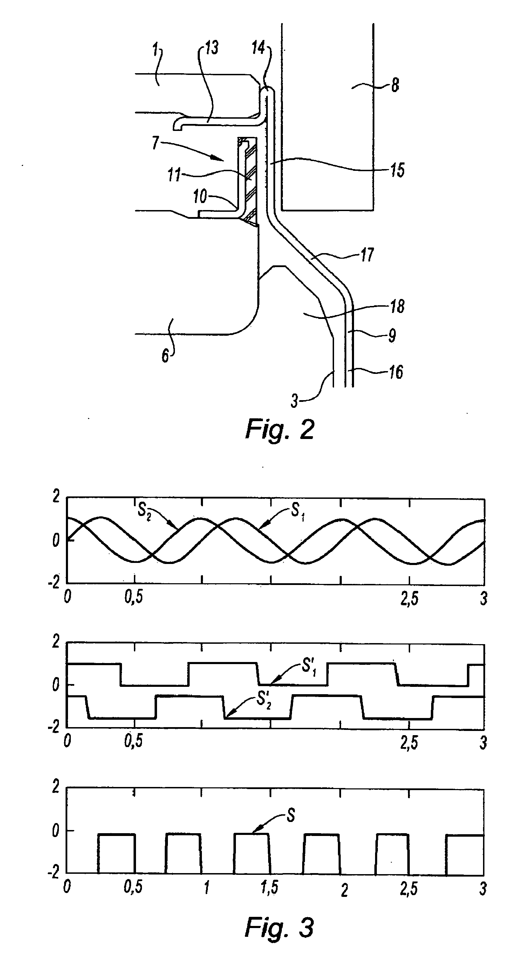

En relation avec les figures 1 et 2, on décrit ci-dessous un mode de réalisation d'un ensemble formant palier à roulement, en particulier pour le montage d'une roue non motrice d'un véhicule automobile.

Le palier comprend un organe extérieur fixe 1 comprenant une bride 2 pourvue de trous de fixation 2a agencés pour permettre la fixation du palier par vissage ou boulonnage, par exemple sur un élément de suspension du véhicule automobile. Le palier comprend également un organe intérieur tournant 3 qui est pourvu d'un flasque 4 pourvu de trous de fixation 4a agencés pour permettre l'association de la roue.

Entre ces deux organes 1, 3, un espace de roulement est formé pour permettre la rotation relative desdits organes. Pour ce faire, chaque organe 1, 3 présente deux pistes de roulement espacées axialement, de sorte à former entre lesdits organes deux chemins de roulement dans lesquels est disposée respectivement une rangée de corps roulants 5 sous la forme de billes.

Sur la figure 1, l'organe intérieur 3 comprend un corps et une bague rapportée 6 qui est emmanchée sur la surface extérieure dudit corps, une piste de roulement étant réalisée sur ladite bague et l'autre piste de roulement étant réalisée sur le corps. Toutefois, l'invention n'est pas limitée à ce mode de réalisation du palier, en particulier relativement à la présence de la bride et du flasque, à la réalisation du chemin de roulement, à la géométrie des corps roulants, à la géométrie des organes fixe et tournant.

Lorsque l'on veut connaître la vitesse de rotation, le sens de déplacement et/ou la position angulaire de l'organe tournant 3 par rapport à l'organe fixe 1, il est connu d'utiliser un système capteur d'informations comprenant, solidaire de l'organe tournant, un codeur 7 générateur d'impulsions magnétiques et un capteur fixe 8 muni d'au moins deux éléments sensibles aptes à détecter ces impulsions.

Pour protéger le codeur 7 de la pollution du milieu environnant, le palier comprend en outre un couvercle 9, par exemple métallique, qui est solidaire de l'organe fixe 1 pour obstruer latéralement l'espace de roulement. Pour ce faire, le codeur 7 est solidarisé à l'organe tournant 3 derrière le couvercle 9 et les éléments sensibles sont disposés, en regard dudit codeur, devant le couvercle 9 de sorte que les impulsions soient détectées au travers dudit couvercle.

Dans le mode de réalisation représenté, le codeur 7 comprend une armature 10, par exemple réalisée en tôle emboutie, qui comprend une portée axiale d'emmanchement sur le diamètre extérieur d'une portée de la bague tournante 6, et une portée radiale sur laquelle le moyen générateur d'impulsions magnétiques est solidarisé.

Dans un exemple de réalisation, le moyen générateur est formé d'un aimant multipolaire 11 en matériau synthétique qui est surmoulé sur la portée radiale, ledit matériau étant chargé de particules magnétiques de sorte à former une pluralité de pôles contigus à direction d'aimantation inversée d'un pôle par rapport au deux pôles contigus.

Le codeur 7 est solidarisé à l'organe intérieur 3 sur un côté de l'espace de roulement, plus précisément sur le côté opposé au flasque de fixation 4 de la roue. En outre, l'autre côté de l'espace de roulement est étanchéifié par la disposition d'un joint d'étanchéité 12 à lèvres frottantes.

Dans le mode de réalisation représenté, le couvercle 9 comprend un disque plein qui est pourvu d'un bord sur lequel une portée axiale 13 est formée, ladite portée étant emmanchée sur le diamètre intérieur d'une portée correspondante de l'organe extérieur 1. En outre, la portée axiale 13 est reliée au disque par l'intermédiaire d'un repli radial 14 qui est disposé en appui sur une portée radiale d'extrémité de l'organe extérieur.

Dans cette réalisation, notamment en prévoyant que le codeur 7 soit disposé sensiblement dans le prolongement radial de la portée d'extrémité (voir figure 2), le positionnement axial du couvercle 9 est bien défini relativement à la position axiale de l'aimant multipolaire 11. Ainsi, le jeu axial entre le codeur 7 et le couvercle 9 peut être minimisé de sorte à limiter la distance entre le codeur 7 et les éléments sensibles.

Toujours pour limiter la distance entre le codeur 7 et les éléments sensibles, le disque présente une portion latérale 15 dans le prolongement radial du repli 14, ladite portion étant destinée à être interposée entre le codeur 7 et le capteur 8. Le disque présente également une géométrie centrale qui est adaptée pour recouvrir sans interférence l'extrémité de l'organe tournant 3. Plus précisément, le disque présente une portion centrale 16 décalée axialement par rapport à la portion latérale 15, lesdites portions étant reliées par un congé de raccordement 17 de sorte à recouvrir le repli annulaire 18 formé sur l'extrémité du corps de l'organe tournant 3 pour retenir axialement la bague 6.

Dans le mode de réalisation représenté, le capteur 8 est dissocié mécaniquement de l'organe fixe 1 et du couvercle 9, en particulier en disposant les éléments sensibles en regard de la portion latérale 15 avec un jeu entre eux.

Outre la limitation de la distance de lecture en disposant au plus près les éléments sensibles relativement au codeur 7, l'invention prévoit un système capteur d'informations dans lequel le codeur 7 émet un signal d'amplitude importante relativement à sa taille et le capteur 8 délivre un signal dont la résolution est adaptée à l'application envisagée.

Pour ce faire, l'aimant multipolaire 11 comprend un nombre réduit de paires de pôles, par exemple 2N paires de pôles avec N strictement inférieur à 24. En particulier, N peut être égal à 12 ou à 6 de sorte à disposer d'un aimant multipolaire à 24 ou 12 paires de pôles. Ainsi, le nombre de paires de pôles étant réduit, leur dimension est plus importante de sorte que chaque pôle délivre un signal de plus grande amplitude. Il en résulte donc que la distance d'entrefer, c'est-à-dire la distance à laquelle les éléments sensibles peuvent détecter le signal délivré, est plus importante qu'avec un aimant conventionnel à 48 paires de pôles par exemple.

Toutefois, la résolution du signal délivré par un tel aimant 11 est moins importante, puisque le nombre d'impulsions par tour de codeur 7 dépend directement du nombre de paires de pôles.

Pour s'affranchir de cette baisse de résolution, le capteur 8 comprend un dispositif de traitement des signaux détectés par les éléments sensibles qui est agencé pour augmenter la résolution du signal de sortie par rapport à celle des signaux détectés. Pour ce faire, le dispositif de traitement comprend des moyens déclencheurs et des moyens d'application de la fonction XOR (OU exclusif) sur les signaux déclenchés.

En relation avec la figure 3, on décrit le traitement de deux signaux analogiques sinusoïdaux S1, S2 qui sont délivrés par les éléments sensibles. Dans cette réalisation, les éléments sensibles peuvent comprendre des sondes à effet Hall ou des magnétorésistances. En particulier, deux éléments sensibles peuvent être utilisés pour délivrer chacun un signal sinusoïdal S1, S2, ou deux groupes d'éléments sensibles peuvent être utilisés pour, par sommation de chacun des signaux d'un groupe, délivrer les deux signaux sinusoïdaux S1, S2 issus de respectivement un groupe. Dans la suite de la description, on utilise le terme « élément sensible » pour désigner indifféremment un élément sensible ou un groupe d'éléments sensibles.

Sur la figure 3, les deux signaux sinusoïdaux S1, S2 sont en quadrature et présentent une résolution égale à celle du signal délivré par l'aimant 11. Selon une réalisation, cette quadrature peut être obtenue en disposant les deux éléments sensibles à une distance égale à une demi-longueur polaire de l'aimant 11.

Selon une autre réalisation, lorsque la distance inter-éléments sensibles n'est pas parfaitement adaptée à la longueur polaire de l'aimant 11, le dispositif de traitement comprend en outre des moyens de combinaison des deux signaux sinusoïdaux issus de respectivement un élément sensible, de sorte à délivrer deux signaux S1, S2 en quadrature. En particulier, les moyens de combinaison peuvent former la somme et la différence des signaux de sorte à délivrer respectivement les signaux S1, S2 en quadrature.

Ensuite, les signaux S1, S2 en quadrature sont traités par les moyens déclencheurs pour former les signaux digitaux S'1 et S'2. Pour ce faire, les signaux S1, S2 peuvent être déclenchés autour de zéro dans un circuit de déclenchement dans lequel l'amplitude du signal de sortie présente une variation d'amplitude brusque et importante pour une faible augmentation du signal d'entrée à partir d'une valeur nulle, de sorte à former les signaux S'1, S'2 carrés tels que représentés sur la figure 3. Les signaux digitaux S'1, S'2 sont déphasés de 90° électrique et ont une résolution égale à celle de l'aimant multipolaire 11.

Dans le mode de réalisation représenté, la résolution des signaux S'1, S'2 est ensuite multipliée par deux par application de la fonction XOR. Ainsi, dans le cas d'un codeur à 24 paires de pôles, la résolution du signal de sortie S est équivalente à celle d'un codeur à 48 paires de pôles.

## Revendications

1. Ensemble formant palier à roulement équipé d'un système capteur d'informations comprenant un codeur (7) générateur d'impulsions magnétiques et un capteur (8) muni d'au moins deux éléments sensibles aptes à détecter ces impulsions, ledit palier comprenant un organe intérieur tournant (3), un organe extérieur fixe (1) et des corps roulants (5) disposés dans un espace de roulement formé entre lesdits organes pour permettre leur rotation relative, ledit palier comprenant en outre un couvercle (9) solidaire de l'organe fixe (1) pour obstruer latéralement ledit espace de roulement, ledit ensemble étant **caractérisé en ce que :**
- ledit codeur est solidarisé à l'organe tournant (3) derrière ledit couvercle et les éléments sensibles étant disposés, en regard dudit codeur, devant ledit couvercle de sorte que les impulsions soient détectées au travers dudit couvercle ; et
- le capteur (8) comprend un dispositif de traitement des signaux détectés par les éléments sensibles, ledit dispositif comprenant des moyens déclencheurs et des moyens d'application de la fonction XOR sur les signaux déclenchés, de sorte à augmenter la résolution du signal de sortie par rapport à celle des signaux détectés.

2. Ensemble selon la revendication 1, **caractérisé en ce que** le codeur (7) comprend un aimant multipolaire (11) comportant 2N paires de pôle, N étant strictement inférieur à 24.

3. Ensemble selon la revendication 2, **caractérisé en ce que** N est égal à 12 ou à 6.

4. Ensemble selon l'une quelconque des revendications 1 à 3, **caractérisé en ce que** les éléments sensibles délivrent deux signaux sinusoïdaux.

5. Ensemble selon la revendication 4, **caractérisé en ce que** le dispositif de traitement comprend en outre des moyens de combinaison des deux signaux sinusoïdaux de sorte à délivrer deux signaux sinusoïdaux en quadrature, lesdits signaux en quadrature étant traités par les moyens déclencheurs et par la fonction XOR.

6. Ensemble selon l'une quelconque des revendications 1 à 5, **caractérisé en ce que** le capteur (8) est dissocié mécaniquement de l'organe fixe (1) et du couvercle (9).

7. Ensemble selon l'une quelconque des revendications 1 à 6, **caractérisé en ce que** le bord du couvercle (9) comporte une portée axiale (13) qui est emmanchée sur le diamètre intérieur d'une portée correspondante de l'organe extérieur (1).

8. Ensemble selon la revendication 7, **caractérisé en ce que** la portée axiale (13) est reliée au couvercle (9) par l'intermédiaire d'un repli radial (14) qui est disposé en appui sur une portée radiale de l'organe extérieur (1).
